# EUROPEAN PATENT SPECIFICATION

(11) **EP 1 975 208 B1**
(45) Date of publication and mention of the grant of the patent: **03.10.2012**
(21) Application number: 08251121.3
(22) Date of filing: 27.03.2008
(51) Int. Cl.: C09D 5/16

(54) **Underwater antifouling coating composition and underwater structures**
Antifouling-Unterwasserbeschichtungszusammensetzung und Unterwasserstrukturen
Composition antisalissure sous-marine et structures sous-marines

(30) Priority: 30.03.2007 JP 2007090376
(43) Date of publication of application: 01.10.2008
(73) Proprietor: Shin-Etsu Chemical Co., Ltd., Tokyo (JP)
(72) Inventor: Ikeno, Masayuki, Annaka-shi Gunma-ken (JP); Sakamoto, Takafumi, Annaka-shi Gunma-ken (JP)
(74) Representative: Stoner, Gerard Patrick

(56) References cited:
- US-A- 5 096 488
- US-A1- 2006 058 452
- DATABASE WPI Week 200735 Thomson Scientific, London, GB; AN 2007-367225 XP002604701 & JP 2007 070370 A (KANSAI PAINT CO LTD) 22 March 2007 (2007-03-22)

## Description

### TECHNICAL FIELD

This invention relates to an underwater antifouling coating composition comprising a non-silicone resin which uses an ionic liquid as its antifouling agent, and this composition has low toxicity as well as prolonged antifouling effects. More specifically, this invention relates to an underwater antifouling coating composition comprising a non-silicone resin which is well adapted for use in coating ships, port facilities, buoy, pipeline, bridge, offshore base, offshore oil rig, raceway for a power plant, net used in aquaculture, pound net, canal, and waterway (which are hereinafter referred to as "underwater structures") to thereby prevent fouling and growth of aquatic organisms on the surface thereof, and underwater structures coated by such underwater antifouling coating composition.

### BACKGROUND

The problem of fouling and growth of the aquatic organisms on the underwater structures has been prevented by coating the underwater structure with an antifouling coating composition containing a toxic antifouling agent such as organotin compound or cuprous oxide. While such antifouling coating composition has been capable of substantially preventing the fouling and growth of the aquatic organisms, use of the toxic antifouling agent in the coating composition presented environmental safety issue during its production and coating, and also, gradual leaching of the toxic antifouling agent from the coating in the water involved the long-term risk of contaminating the water.

In the meanwhile, room temperature curable silicone rubber composition having an ionic liquid added thereto has been disclosed in our JP-A-2006/083211 (EP-A-1634928) (Patent Document 1). This composition has the effect of preventing fouling and growth of the aquatic organisms, and this composition is also free from the toxic antifouling agent. However, the coating comprising a silicone rubber tends to have a relatively low strength, and is easily chipped by physical impact. Aquatic organisms can foul and start to grow from a site of such chipping, where the coating is absent.

US 5,096,488 discloses coating compositions suitable for preventing the growth of algae or fungi when coated on materials which are used in wet environments. The compositions are emulsions of a vinyl polymer and a non-metallic algicide, which algicide comprises a dialkyldimethyl ammonium compound.

The present invention has been accomplished in view of the situation as described above, and an object of the present invention is to provide new and useful underwater antifouling coating compositions for coating underwater structures, which are well adapted for preventing fouling and growth of aquatic organisms on the surface of the underwater structures, which exhibit good duration of the effects as well as good coating strength, and which address environmental safety issues. Other aspects are the use of such compositions for coating underwater structures, and underwater structures having such coatings.

The inventors of the present invention have made an intensive study to realize the objects as described above, and found that coating strength can be improved by using a non-silicone resin according to the claims for the binder, while duration of the effect of preventing the fouling and growth of the aquatic organisms can be achieved by choosing ionic liquid having a melting point of up to 35°C. The present invention has been accomplished on the basis of such findings.

Accordingly, the present invention provides an underwater antifouling coating composition and an underwater structure as described below.
[1] An underwater antifouling coating composition comprising a non-silicone resin according to claim 1 blended with a water-insoluble ionic liquid having a melting point of up to 35°C.
[2] The underwater antifouling coating composition according to [1] wherein the non-silicone resin comprises vinyl chloride copolymer resin, according to claim 2.
[3] The underwater antifouling coating composition according to [1] or [2] wherein the water-insoluble ionic liquid has a melting point of -130°C to 30°C.
[4] The underwater antifouling coating composition according to any one of [1] to [3] wherein the water-insoluble ionic liquid is one comprising a quaternary ammonium cation and an anion Y⁻ represented by the general formula (1):

   R¹₄N⁺ · Y⁻ (1)

   wherein R¹ is independently represents hydrogen atom or an organic group containing 1 to 20 carbon atoms, wherein two of the organic groups represented by R¹ may together represent a cyclic structure.
[5] The underwater antifouling coating composition according to [4] wherein R¹ in the formula (1) is a monovalent hydrocarbon group or alkoxyalkyl group each containing 1 to 20 carbon atoms, or two R¹ together represent an alkylene group containing 2 to 10 carbon atoms or a divalent organic group represented by -(CH₂)ₐ-O-(CH₂)_{b}- wherein a and b is respectively an integer of 1 to 5 with the proviso that a+b is an integer of 4 to 10.
[6] The underwater antifouling coating composition according to [4] or [5] wherein the quaternary ammonium cation represented by R¹₄N⁺ of the formula (1) is an aliphatic nitrogen cation, alicyclic nitrogen cation or aromatic nitrogen cation.
[7] The underwater antifouling coating composition according to any one of [4] to [6] wherein the anion Y⁻ in the formula (1) is AlCl₄⁻, ClO₄⁻, BF₄⁻, FeCl₄⁻, (CF₃SO₂)₂N⁻, CF₃SO₃⁻ or PF₆⁻.
[8] The underwater antifouling coating composition according to any one of [4] to [6] wherein the anion Y⁻ in the formula (1) is (CF₃SO₂)₂N⁻, CF₃SO₃⁻, PF₆⁻ or 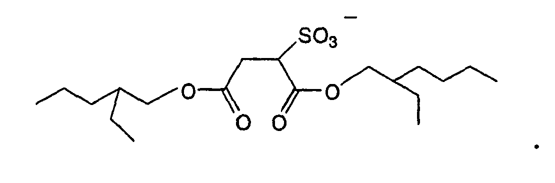
[9] The underwater antifouling coating composition according to any one of [1] to [8] wherein the ionic liquid is incorporated at 1 to 20 % by weight in the underwater antifouling coating composition.
[10] An underwater structure coated with the underwater antifouling coating composition of any one of [1] to [9].
[11] A method comprising coating a structure, intended for underwater use, with any antifouling composition as proposed herein.

### EFFECTS

We find that underwater antifouling coating compositions as proposed herein exhibit low toxicity, improved coating strength, and prolonged duration of the antifouling effect. In the case of the underwater structure prepared by coating such coating composition, fouling and growth of aquatic organisms on the surface is prevented, and the surface exhibits such effect for an extended period of time. The environmental safety issue is also addressed.

### FURTHER EXPLANATIONS; OPTIONS AND PREFERENCES

The underwater antifouling coating composition of the present invention comprises a non-silicone resin according to the claims, blended with a water-insoluble ionic liquid having a melting point of up to 35° C.

The non-silicone resin used in the present invention forms the coating on the surface of the substrate, and the resin commonly used in preparing the conventional underwater antifouling coating composition containing cuprous oxide or organotin may be used. Base resins for the coating composition are vinyl chloride copolymer resins such as vinyl chloride - vinyl acetate copolymer resin, vinyl chloride - vinyl acetate - vinyl alcohol copolymer resin, vinyl chloride - vinyl isobutyl ether copolymer resin, and vinyl chloride - vinyl propionate copolymer resin; chlorinated rubber resins; chlorinated olefin resins; acrylic resins such as (meth)acrylate copolymer resin and silyl silyl(meth)acrylate; or styrene - butadiene copolymer resins.

The ionic liquid used in the present invention is a critical component, and it plays in the present invention an important role of preventing the fouling. See Patent Document 1 mentioned above. An ionic liquid is a molten salt which is liquid at about room temperature, and it is also called a room temperature molten salt. The melting point is typically up to 35° C, preferably -130 to 30° C, more preferably -100 to 30° C, and still more preferably -50 to 20°C. Such ionic liquids are involatile, i.e. have no vapor pressure. They also exhibit high heat resistance, incombustibility, and chemical stability. When the melting point is higher than the range as defined above, dispersibility in the composition will be insufficient, and in turn, the antifouling effect will not be fully exerted.

In addition, the ionic liquid used will of course (as known per se) be generally water-insoluble to provide suitable duration of the antifouling effect.

Preferable ionic liquid used in the present invention is one comprising quaternary ammonium (quadricovalent nitrogen) cation, and anion, e.g. as represented by the general formula (1):

R¹₄N⁺·Y⁻ (1)

wherein R¹ independently represents hydrogen atom or an organic group containing 1 to 20 carbon atoms, wherein two of the organic groups represented by R¹ may together represent a cyclic structure, and Y⁻ represents anion species. Typically R¹ are all organic.

Examples of the organic group represented by R¹ include monovalent hydrocarbon groups and alkoxyalkyl groups each containing 1 to 20 carbon atoms, and more particularly, alkyl groups such as methyl group, ethyl group, propyl group, butyl group, pentyl group, hexyl group, cyclohexyl group, and heptyl group; aryl groups such as phenyl group, tolyl group, xylyl group, and naphthyl group; aralkyl groups such as benzyl group and phenethyl group; alkoxyalkyl groups such as ethoxyethyl group. If desired, two of the organic groups represented by R¹ may together represent a cyclic structure, and in this case, two R¹ together represent a divalent organic group. The backbone of this divalent organic group may solely comprise carbon atoms (e.g. an alkylene group preferably containing 2 to 10, especially 3 to 10 carbon atoms) or optionally contain heteroatom such as oxygen atom or nitrogen atom. An example is -(CH₂)ₐ-O-(CH₂)_{b}- wherein a and b is respectively an integer of 1 to 5, with the proviso that a+b is an integer of 4 to 10.

Examples of the quaternary ammonium cation represented by R¹₄N⁺ of the formula (1) include aliphatic nitrogen cations, alicyclic nitrogen cations, and aromatic nitrogen cations (pyridinium, pyridazinium, pyrazinium, imidazolium, pyrazolium, oxazolium, and triazolium).

The anion species Y⁻ is not particularly limited, and examples include AlCl₄⁻, ClO₄⁻, BF₄⁻, FeCl₄⁻, (CF₃SO₂)₂N⁻, CF₃SO₃⁻, and PF₆⁻. The most preferable anions include (CF₃SO₂)₂N⁻, CF₃SO₃⁻, PF₆⁻, and 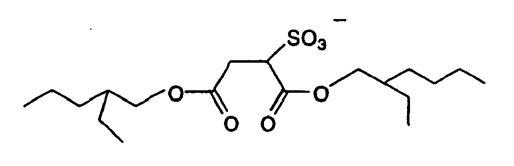 which can impart particularly effective water-insoluble properties.

Examples of the ionic liquid represented by the general formula (1) having a melting point of up to 35°C include the following species. 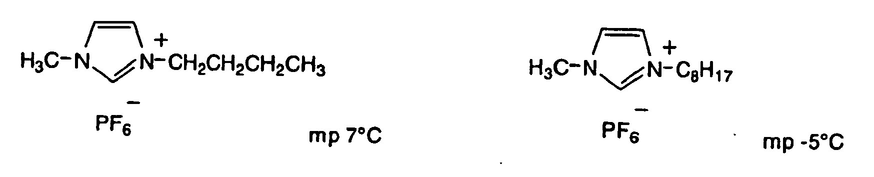 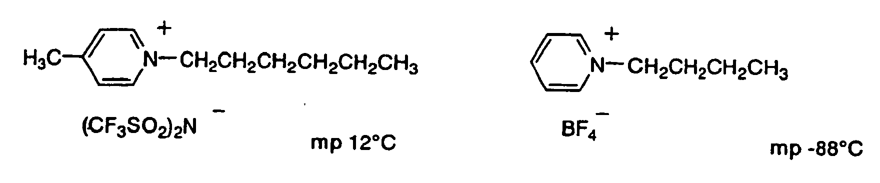 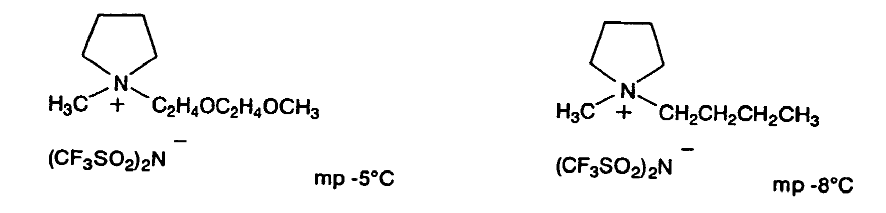 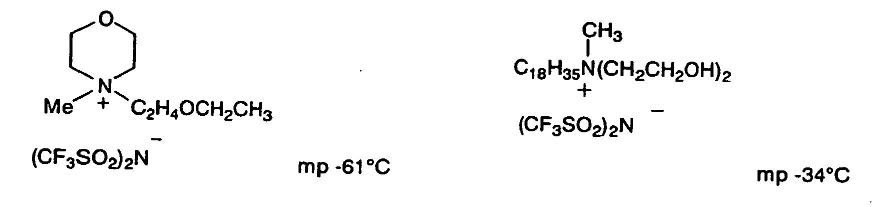 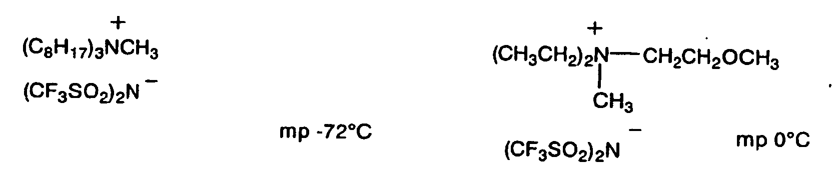 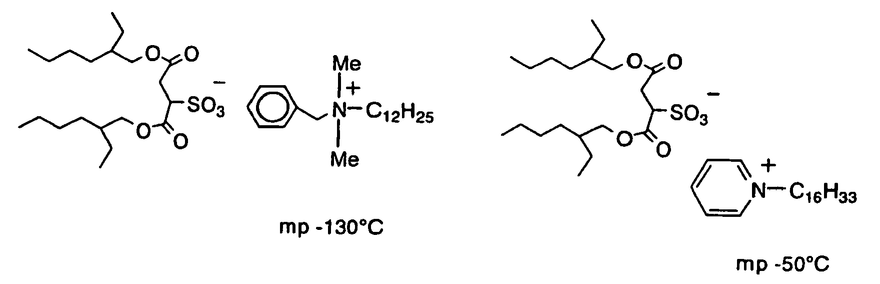 Me represents methyl group.

The ionic liquid as described above is preferably incorporated at 1 to 20% by weight, and more preferably at 1 to 10% by weight in the underwater antifouling coating composition. Excessive incorporation of the ionic liquid is economically unfavorable while insufficient incorporation may result in insufficient antifouling properties.

The underwater antifouling coating composition of the present invention may optionally contain additives commonly used in the art such as plasticizer, pigment, and solvent.

Exemplary plasticizers used include phthalate plasticizers such as dioctyl phthalate, dimethyl phthalate, and dicyclohexyl phthalate; aliphatic dibasic acid ester plasticizers such as isobutyl adipate and dibutyl sebacate; glycol ester plasticizers such as diethylene glycol dibenzoate, and pentaerythritol alkyl ester; phosphate plasticizers such as triglen diphosphoric acid, and trichloroethyl phosphate; epoxy plasticizers such as epoxy soybean oil, and octyl epoxy stearate; and trioctyl trimellitate, triacetylene; which may be used alone or in combination of two or more.

The plasticizer is preferably blended at 0 to 20% by weight, and more preferably at 0 to 10% by weight in relation to the underwater antifouling coating composition. When the plasticizer is incorporated, the plasticizer is preferably incorporated at a content of up to 1% by weight. Insufficient incorporation may result in the generation of cracks under physical impact, and excessive incorporation may result in the reduced strength of the coating.

Exemplary pigments used include extenders such as precipitated barium, talc, clay, chalk, silica, alumina, bentonite, and zinc oxide; and coloring pigments such as titanium oxide, zircon oxide, basic lead sulfate, tin oxide, carbon black, graphite, iron red, chrome yellow, phthalocyanine green, phthalocyanine blue, quinacridone; which may be used alone or in combination of two or more.

When the pigment is incorporated, it is preferably blended at 0 to 50% by weight, and more preferably at 5 to 30% by weight in relation to the underwater antifouling coating composition. Insufficient incorporation may result in the unduly thin coating, and excessive incorporation may result in the failure of forming a consistent coating.

Exemplary solvents used include hydrocarbons such as toluene, xylene, ethylbenzene, cyclopentane, octane, heptane, cyclohexane, and white spirit; ethers such as dioxane, tetrahydrofuran, ethylene glycol monomethyl ether, ethylene glycol monoethyl ether, ethylene glycol monobutyl ether, ethylene glycol dibutyl ether, diethylene glycol monomethyl ether, and diethylene glycol monoethyl ether; esters such as butyl acetate, propyl acetate, benzyl acetate, ethylene glycol monomethyl ether acetate, and ethylene glycol monoethyl ether acetate; ketones such as ethyl isobutyl ketone and methyl isobutyl ketone; and alcohols such as n-butanol and propyl alcohol; which may be used alone or in combination of two or more.

When the solvent is incorporated, it is preferably blended at 5 to 95% by weight, and more preferably, at 10 to 80% by weight in relation to the underwater antifouling coating composition. Insufficient incorporation may result in the failure of forming a consistent coating, and excessive incorporation may result in unduly thin coating.

In addition to the additives as described above, additives such as coating consumption adjusting agent, thixotropic agent, anti-precipitation agent, and antifoaming agent may be added at an amount which does not adversely affect the object of the composition.

Underwater antifouling coating compositions embodying the present invention may be prepared by blending the non-silicone resin with an ionic liquid according to the claims, and additives commonly used in the art such as a plasticizer, a coating consumption adjusting agent, a pigment, and a solvent, and mixing the ingredients in a blender such as ball mill, pebble mill, roll mill, and sand grind mill.

The underwater antifouling coating composition of the present invention may be coated to the surface of the substrate by the method commonly used in the art, and then, the solvent may be removed at room temperature or by applying heat to thereby form a dry coating.

The underwater antifouling coating composition of the present invention can be coated on the surface of an underwater structure such as ships, port facilities, buoy, pipeline, bridge, offshore base, offshore oil rig, raceway for a power plant, net used in aquaculture, pound net, canal, and waterway to thereby prevent fouling and growth of aquatic organisms on the surface. Coating compositions embodying the invention are found to exhibit such effects for a prolonged time.

### EXAMPLES

Next, the present invention is described in further detail by referring to the following Examples and Comparative Examples which by no means limit the scope of the present invention. In the following Examples and Comparative Examples, Me stands for methyl group, and Et stands for ethyl group.

### Example 1

40 parts by weight of vinyl chloride - vinylisobutyl ether copolymer, 10 parts by weight of zinc oxide, 5 parts by weight of iron red, 3 parts by weight of colloidal silica, 10 parts by weight of talc, 5 parts by weight of xylene, 5 parts by weight of methyl isobutyl ketone, 5 parts by weight of n-butyl alcohol, and 10 parts by weight of the water-insoluble ionic liquid A as shown below were mixed, and mixture was stirred for 3 hours to produce Coating Composition A.

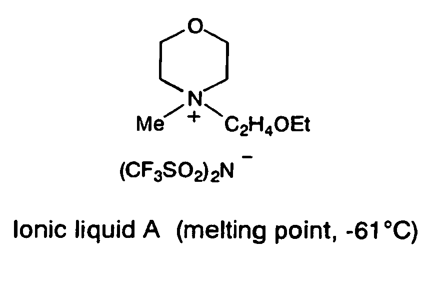

### Example 2

The procedure of Example 1 was repeated except that 10 parts by weight of ionic liquid A was replaced with 10 parts by weight of the water-insoluble ionic liquid B as shown below to produce the Coating Composition B.

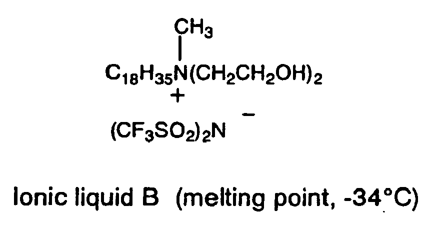

### Example 3

The procedure of Example 1 was repeated except that 10 parts by weight of ionic liquid A was replaced with 10 parts by weight of the water-insoluble ionic liquid C as shown below to produce the Coating Composition C.

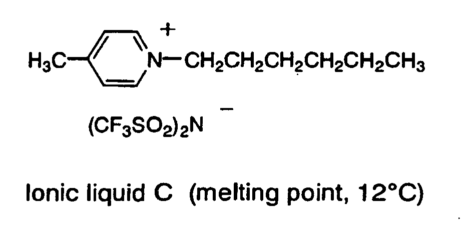

### Example 4

The procedure of Example 1 was repeated except that 10 parts by weight of ionic liquid A was replaced with 10 parts by weight of the water-insoluble ionic liquid D as shown below to produce the Coating Composition D.

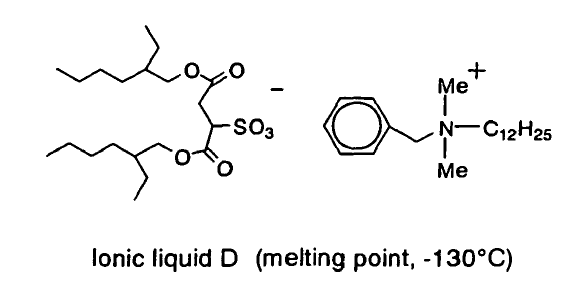

### Comparative Example 1

The procedure of Example 1 was repeated except that 10 parts by weight of ionic liquid A was replaced with 10 parts by weight of the water-soluble ionic liquid E as shown below to produce the Coating Composition E.

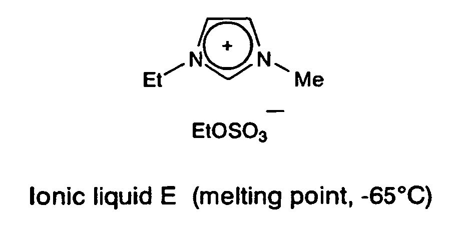

### Comparative Example 2

The procedure of Example 1 was repeated except that 10 parts by weight of ionic liquid A was replaced with 10 parts by weight of the water-soluble ionic liquid F as shown below to produce the Coating Composition F.

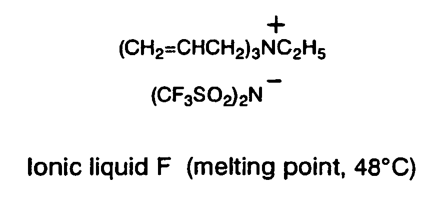

### Performance test

A plate was preliminarily coated with an epoxy anticorrosive coating composition (thickness, 200 µm), and on this plate was coated the coating compositions produced in the Examples and the Comparative Examples as described above to a thickness (after drying) of 100 µm/coating. The thus prepared test plate was hanged in the sea at a depth of 1.5 m for 12 months at a location off the coast of Kanagawa prefecture, Japan. The degree of fouling by barnacles and shells as well as by seaweed was observed. The results are shown in Table 1.

**Table 1**

| | Example | | | | Comparative Example | |
|---|---|---|---|---|---|---|
| | 1 | 2 | 3 | 4 | 1 | 2 |
| Fouling after 3 months | No fouling | No fouling | No fouling | No fouling | Considerable fouling | Slight fouling |
| Fouling after 6 months | No fouling | No fouling | No fouling | No fouling | Considerable fouling | Considerable fouling |
| Fouling after 12 months | No fouling | No fouling | No fouling | No fouling | Considerable fouling | Considerable fouling |

## Claims

1. An underwater antifouling coating composition comprising a non-silicone resin, selected from vinyl chloride copolymer resin, chlorinated rubber resin, chlorinated olefin resin, acrylic resin and styrene - butadiene copolymer resin, blended with a water-insoluble ionic liquid having a melting point of up to 35°C.

2. An underwater antifouling coating composition according to claim 1 comprising said vinyl chloride copolymer resin selected from vinyl chloride-vinyl acetate copolymer resin, vinyl chloride-vinyl acetate-vinyl alcohol copolymer resin, vinyl chloride-vinyl isobutyl ether copolymer resin and vinyl chloride-vinyl propionate copolymer resin.

3. An underwater antifouling coating composition according to claim 1 or 2 wherein the water-insoluble ionic liquid has a melting point of -130°C to 30°C.

4. An underwater antifouling coating composition according to any one of claims 1 to 3 wherein the water-insoluble ionic liquid is one comprising quaternary ammonium cation and anion Y⁻, represented by the general formula (1):
R¹₄N⁺·Y⁻ (1)
wherein R¹ independently represents hydrogen atom or organic group containing 1 to 20 carbon atoms, and wherein two of the organic groups represented by R¹ may together represent a cyclic structure.

5. An underwater antifouling coating composition according to claim 4 wherein R¹ in the formula (1) is a monovalent hydrocarbon group or alkoxyalkyl group, containing 1 to 20 carbon atoms, or two R¹ groups together represent an alkylene group containing 2 to 10 carbon atoms or a divalent organic group represented by -(CH₂)ₐ-O-(CH₂)_{b}- wherein a and b are respectively integers of 1 to 5 with the proviso that a+b is an integer of 4 to 10.

6. An underwater antifouling coating composition according to claim 4 or 5 wherein the quaternary ammonium cation represented by R¹₄N⁺ of the formula (1) is an aliphatic nitrogen cation, alicyclic nitrogen cation or aromatic nitrogen cation.

7. An underwater antifouling coating composition according to any one of claims 4 to 6 wherein the anion Y⁻ in the formula (1) is AlCl₄⁻, ClO₄⁻, BF₄⁻, FeCl₄⁻, (CF₃SO₂)₂N⁻, CF₃SO₃⁻ or PF₆⁻.

8. An underwater antifouling coating composition according to any one of claims 4 to 6 wherein the anion Y⁻ in the formula (1) is (CF₃SO₂)₂N⁻, CF₃SO₃⁻, PF₆⁻ or

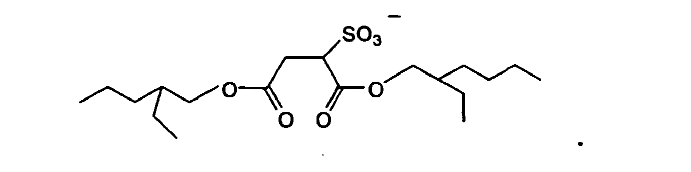

9. An underwater antifouling coating composition according to any one of claims 1 to 8 wherein the water-insoluble ionic liquid is incorporated at 1 to 20 % by weight in the underwater antifouling coating composition.

10. An underwater structure coated with an underwater antifouling coating composition of any one of claims 1 to 9.

11. A method comprising coating a structure intended for underwater use with a composition according to any one of claims 1 to 9.

## Patentansprüche

1. Unterwasser-Antifouling-Beschichtungszusammensetzung, die ein aus Vinylchlorid-Copolymerharz, Chlorkautschukharz, Chlorolefinharz, Acrylharz und StyrolButadien-Copolymerharz ausgewähltes Harz, das kein Silikonharz ist, im Gemisch mit einer wasserunlöslichen ionischen Flüssigkeit mit einem Schmelzpunkt von bis zu 35 °C umfasst.

2. Unterwasser-Antifouling-Beschichtungszusammensetzung nach Anspruch 1, die das Vinylchlorid-Copolymerharz umfasst, das aus Vinylchlorid-Vinylacetat-Copolymerharz, Vinylchlorid-Vinylacetat-Vinylalkohol-Copolymerharz, Vinylchlorid-Vinylisobutylether-Copolymerharz und Vinylchlorid-Vinylpropionat-Copolymerharz ausgewählt ist.

3. Unterwasser-Antifouling-Beschichtungszusammensetzung nach Anspruch 1 oder Anspruch 2, worin die wasserunlösliche ionische Flüssigkeit einen Schmelzpunkt von -130°C bis 30°C aufweist.

4. Unterwasser-Antifouling-Beschichtungszusammensetzung nach einem der Ansprüche 1 bis 3, worin die wasserunlösliche ionische Flüssigkeit eine ist, die ein quaternäres Ammoniumkation und ein Anion Y- umfasst und durch die allgemeine Formel (1) dargestellt ist:
R¹₄N⁺·Y⁻ (1)
worin R¹ jeweils für ein Wasserstoffatom oder eine organische Gruppe, die 1 bis 20 Kohlenstoffatome enthält, steht und worin zwei der organischen Gruppen, für die R¹ steht, zusammen eine zyklische Struktur darstellen können.

5. Unterwasser-Antifouling-Beschichtungszusammensetzung nach Anspruch 4, worin R¹ in der Formel (1) eine einwertige Kohlenwasserstoffgruppe oder Alkoxyalkylgruppe ist, die 1 bis 20 Kohlenstoffatome enthält, oder zwei R¹-Gruppen zusammen für eine Alkylengruppe, die 2 bis 10 Kohlenstoffatome enthält, oder für eine durch -(CH₂)ₐ-O-(CH₂)_{b}- dargestellte zweiwertige organische Gruppe stehen, worin a und b jeweils ganze Zahlen von 1 bis 5 sind, mit der Maßgabe, dass a + b eine ganze Zahl von 4 bis 10 ist.

6. Unterwasser-Antifouling-Beschichtungszusammensetzung nach Anspruch 4 oder 5, worin das durch R¹₄N⁺ der Formel (1) dargestellte quaternäre Ammoniumkation ein aliphatisches Stickstoffkation, ein alizyklisches Stickstoffkation oder ein aromatisches Stickstoffkation ist.

7. Unterwasser-Antifouling-Beschichtungszusammensetzung nach einem der Ansprüche 4 bis 6, worin das Anion Y⁻ in der Formel (1) AlCl₄⁻, ClO₄⁻, BF₄⁻, FeCl₄⁻, (CF₃SO₂)₂N⁻, CF₃SO₃⁻ oder PF₄⁻ ist.

8. Unterwasser-Antifouling-Beschichtungszusammensetzung nach einem der Ansprüche 4 bis 6, worin das Anion Y⁻ in der Formel (1) (CF₃SO₂)₂N⁻, CF₃SO₃⁻, PF₄⁻ oder 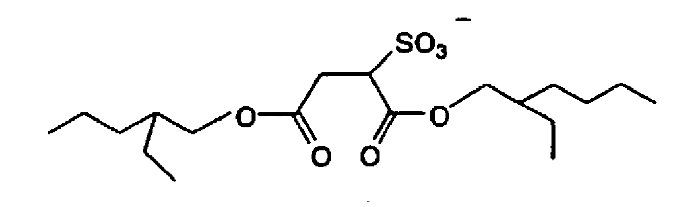 ist.

9. Unterwasser-Antifouling-Beschichtungszusammensetzung nach einem der Ansprüche 1 bis 8, worin die wasserunlösliche ionische Flüssigkeit zu 1 bis 20 Gew.-% in der Unterwasser-Antifouling-Beschichtungszusammensetzung enthalten ist.

10. Unterwasserstruktur, beschichtet mit einer Unterwasser-Antifouling-Beschichtungszusammensetzung nach einem der Ansprüche 1 bis 9.

11. Verfahren, umfassend das Überziehen einer zur Verwendung unter Wasser vorgesehenen Struktur mit einer Zusammensetzung nach einem der Ansprüche 1 bis 9.

## Revendications

1. Composition de revêtement antifouling sousmarine comprenant une résine non-silicone, sélectionnée parmi une résine de copolymère de vinyle chlorure, une résine de caoutchouc chloré, une résine d'oléfine chlorée, une résine acrylique et une résine de copolymère styrène-butadiène, mélangée avec un liquide ionique insoluble dans l'eau ayant un point de fusion jusqu'à 35°C.

2. Composition de revêtement antifouling sousmarine selon la revendication 1, comprenant ladite résine de copolymère de vinyle chlorure sélectionnée parmi la résine de copolymère de vinyle chlorure-vinyle acétate, la résine de copolymère de vinyle chlorure-vinyle acétate-vinyle alcool, la résine de copolymère de vinyle chlorure-vinyle isobutyle éther et la résine de copolymère de vinyle chlorure-vinyle propionate.

3. Composition de revêtement antifouling sousmarine selon la revendication 1 ou 2, où le liquide ionique insoluble dans l'eau possède un point de fusion de -130°C à 30°C.

4. Composition de revêtement antifouling sousmarine selon l'une quelconque des revendications 1 à 3, où le liquide ionique insoluble dans l'eau est un comprenant un cation et anion Y⁻ d'ammonium quaternaire, représenté par la formule générale (1):
R¹₄N⁺·Y⁻ (1)
où R¹ représente indépendamment l'atome d'hydrogène ou un groupe organique contenant 1 à 20 atomes de carbone, et où deux des groupes organiques représentés par R¹ peuvent représenter ensemble une structure cyclique.

5. Composition de revêtement antifouling sousmarine selon la revendication 4, où R¹ dans la formule (1) est un groupe d'hydrocarbures ou groupe d'alcoxyalkyles monovalent, contenant 1 à 20 atomes de carbone, ou bien deux groupes R¹ ensemble représentent un groupe alkylène contenant 2 à 10 atomes de carbone ou un groupe organique divalent représenté par -(CH₂)ₐ-O-(CH₂)_{b}-, où a et b sont respectivement des entiers de 1 à 5 à condition que a+b soit un entier de 4 à 10.

6. Composition de revêtement antifouling sousmarine selon la revendication 4 ou 5, où le cation d'ammonium quaternaire représenté par R¹₄N⁺ de la formule (1) est un cation d'azote aliphatique, cation d'azote alicyclique ou cation d'azote aromatique.

7. Composition de revêtement antifouling sousmarine selon l'une quelconque des revendications 4 à 6, où l'anion Y⁻ dans la formule (1) est AlCl₄⁻, ClO₄⁻, BF₄⁻, FeCl₄⁻, (CF₃SO₂)₂N⁻, CF₃SO₃ ou PF₆⁻.

8. Composition de revêtement antifouling sousmarine selon l'une quelconque des revendications 4 à 6, où l'anion Y⁻ dans la formule (1) est (CF₃SO₂)₂N⁻, CF₃SO₃⁻ ou PF₆⁻ ou

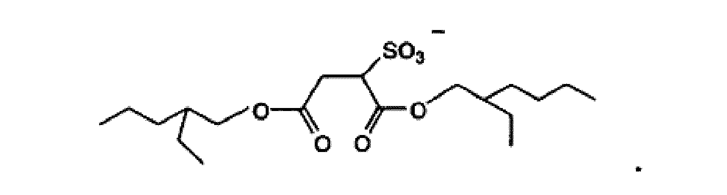

9. Composition de revêtement antifouling sousmarine selon l'une quelconque des revendications 1 à 8, où le liquide ionique insoluble dans l'eau est incorporé selon 1 à 20% en poids dans la composition de revêtement antifouling sousmarine.

10. Structure sousmarine revêtue d'une composition de revêtement antifouling sousmarine selon l'une quelconque des revendications 1 à 9.

11. Procédé comprenant le revêtement d'une structure prévu pour une utilisation sousmarine avec une composition selon l'une quelconque des revendications 1 à 9.
